# EUROPEAN PATENT SPECIFICATION

(11) **EP 3 227 047 B1**
(45) Date of publication and mention of the grant of the patent: **27.11.2019**
(21) Application number: 15865110.9
(22) Date of filing: 02.12.2015
(51) Int. Cl.: B22F 3/105, C01G 23/02, C01G 1/06

(54) **APPARATUS AND METHOF FOR NEUTRALIZATION OF REACTIVE METAL CONDENSATE IN ADDITIVE MANUFACTURING**
VORRICHTUNG UND VERFAHREN ZUR NEUTRALISIERUNG EINES REAKTIVEN METALLKONDENSATS IN DER GENERATIVEN FERTIGUNG
DISPOSITIF ET PROCÉDÉ DE NEUTRALISATION DE CONDENSAT DE MÉTAL RÉACTIF DANS LA FABRICATION ADDITIVE

(30) Priority: 05.12.2014 US 201462088019 P
(43) Date of publication of application: 11.10.2017
(73) Proprietor: Moog Inc., Elma, NY 14059 (US)
(72) Inventor: GUERRIER, Paul, Tewkesbury GL20 7RW (GB); BROOKS, Ian L., Gloucester GL3 3RQ (GB)
(74) Representative: Jones, John Bryn
(86) International application number: PCT/US2015/063356
(87) International publication number: WO 2016/089953

(56) References cited:
- EP-A1- 2 774 703
- WO-A2-2014/125281
- JP-A- 2002 038 201
- US-A- 2 519 385
- US-A- 3 352 628
- US-A- 5 732 323
- US-A1- 2011 052 481
- US-A1- 2013 344 258
- US-B1- 6 429 402
- 'EOSINT M280: a user review.' INSIDE METAL ADDITIVE MANUFACTURING 07 August 2014, pages 1 - 4, XP055451328 Retrieved from the Internet: <URL:http://www.insidemetaladditivemanufact uring.com/blog/eosint-m280-a-user-review-pa rt13>
- DRAGANIC, I. ET AL.: 'Lifetime Study of Tungsten Filaments in an H- Surface Converter Ion Source' PROC. PAC 2013, pages 1 - 3, XP055451423 Retrieved from the Internet: <URL:http://accelconf.web.cern.ch/AccelConf /PAC2013/papers/thpac23.pdf>

## Description

### FIELD OF THE INVENTION

This invention relates to additive manufacturing (AM) and, more particularly, to neutralization of condensate in an AM system.

### BACKGROUND OF THE INVENTION

AM enables fabrication of three-dimensional objects from a digital model or another electronic data source through additive processes in which successive layers of material are laid down. A laser beam or electron beam is used to fuse a previously-leveled powder surface layer into a thin sheet of solid material. A further layer of powder is applied on top of the previously-fused thin sheet and the process is repeated until a three-dimensional object is built layer-by-layer. This process is known as, for example, powder bed fusion (PBF), laser selective melting, or direct laser metal sintering. The process may be applied to metals, plastics, or other materials that can be fused together.

The AM process may be contained in a chamber filled with an inert gas to prevent unwanted chemical reactions or the oxidation of molten metal. This inert gas may be, for example, argon. During the layer fusion process of, for example, a metal, the surface of the melt pool overheats and vaporizes. Vaporized material cools and condenses within the inert atmosphere into nanometer-sized dust, referred to herein as "condensate." These condensate particles may be approximately 10 nm to 100 µm in diameter or longest dimension. This condensate is initially suspended in the inert gas within the chamber. Condensate in the chamber may settle on a surface or remain suspended in the inert gas as a smoke. This poses a safety hazard because the condensate may be highly reactive in the presence of oxygen, which can result in a severe risk of explosion or fire.

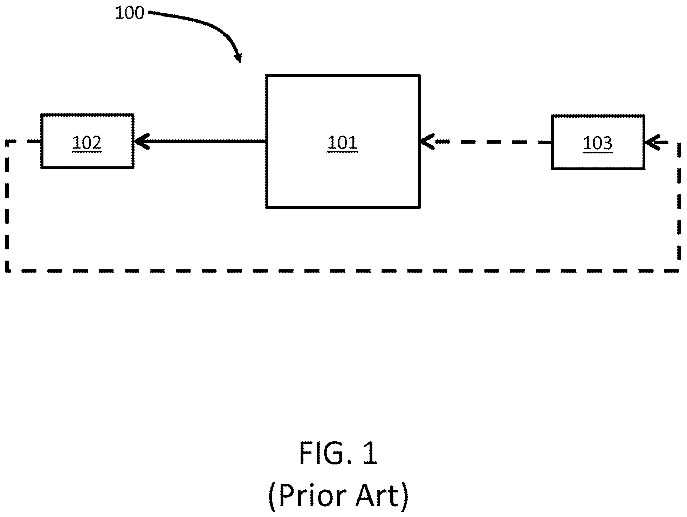

FIG. 1 is a schematic of an AM system 100 of the prior art. The AM system 100 includes a build chamber 101, which is where the layer fusion process occurs. To reduce the risk to personnel, convection currents of the inert gas can direct the condensate out of the build chamber 101. The inert gas and suspended condensate (represented by the solid arrow) can be pumped through a filter 102 to capture the solid material. Inert gas with less condensate or even no condensate (represented by the dashed arrow) is then pumped to the build chamber 101 using the circulating fan 103. Large quantities of condensate can be captured in the filter 102, but the filter 102 may not capture all of the condensate and not all the condensate may be directed out of the build chamber 101. Thus, while some condensate is directed toward the filter 102, a significant portion of the condensate may accumulate in and around the chamber 101.

Settled condensate may build up on the walls of the chamber 101, the transparent window through which the laser beam is directed, or the object being manufactured. The laser beam may be obscured and the AM process may be interrupted or degraded if condensate settles on the transparent window. This can result in the production of poor-quality parts. For example, an object may take 10 to 200 hours to build in an AM system. However, the transparent window may be obscured after only approximately five hours of use due to deposits that have formed. It may be necessary to pause and clean the system if the transparent window is obscured.

Any condensate build-up on the object being manufactured can impact the quality or properties of this object. For example, condensate may reduce fidelity or impact the shape, dimensions, or physical properties of the object being manufactured. The condensate build-up may even ruin the object being manufactured. Thus, there may be a maximum build time that can be performed before the chamber 101 and transparent window need to be cleaned due to the presence of the condensate. This may render AM unsuitable for fabricating large or geometrically-complex objects.

Condensate build-up on the walls of the chamber 101 can be a fire risk, which presents a safety issue for operators during manual cleaning. Some materials in the condensate may be highly-reactive in air, which may lead to spontaneous ignition if enough condensate has accumulated and the chamber 101 is opened for cleaning or maintenance. For example, titanium or aluminum condensate can be formed during laser processing. Titanium or aluminum dust is a fire hazard and, when exposed to air, may pose an explosion hazard. Fires or explosions can occur while cleaning the chamber 101, especially in vacuum cleaners or other cleaning equipment used during the cleaning process. Serious accidents have occurred while cleaning condensate or handling filters 102 contaminated with condensate.

Contaminated filters 102 must be manually removed during replacement and disposed of in a specialized facility for hazardous waste. Changing or handling the filter 102 increases the risk of spontaneous combustion and serious accidents. Several injuries have been reported during filter cleaning or replacement. To reduce fire risk with the filter 102, the dimensions of the filter 102 are kept small. However, this limits the maximum build time during the AM process before the filter 102 must be replaced. Furthermore, not all the condensate is collected in the filter 102 and the explosion or fire risk in the chamber 101 remains.

Therefore, what is needed is a system and method of condensate neutralization during AM and, more particularly, neutralization of condensate during AM process that converts the condensate to a safe form.

US5732,323 discloses a method for the fabrication of dimensionally accurate by laser sintering.

EP2774703 shows an apparatus for producing work pieces under elevated pressure.

US6429402 describes a method and apparatus for the controlled laser production of elongated articles from particulates.

US2011/052481 describes a method for treating metalliferous materials.

JP2002038201 shows a method and apparatus for producing three-dimensional shape molded article.

In an embodiment of the invention, there is provided an additive manufacturing system for additive manufacturing as claimed in claim 1.

In an embodiment of the invention, there is provided a method for neutralizing a metal condensate as claimed in claim 7.

In an embodiment of the invention, there is provided a method for removing particles from the surface of an additive manufacturing component as defined in claim 11.

### BRIEF SUMMARY OF THE INVENTION

Metal condensate can be neutralized by converting it to a safe compound or a safe form of the metal. Titanium is one example of a metal condensate that can be converted. In an example, reactive titanium nano-scale condensate is transformed into an inert macro-scale titanium deposit. This can be a closed process.

### DESCRIPTION OF THE DRAWINGS

For a fuller understanding of the nature and objects of the invention, reference should be made to the following detailed description taken in conjunction with the accompanying drawings, in which:
FIG. 1 is a schematic block diagram of an AM system of the prior art;
FIG. 2 represents a chemical reaction process that can be used in an AM system in accordance with an embodiment of the present invention;
FIG. 3 is a schematic block diagram of an AM system using a halogen gas in accordance with an embodiment of the present invention;
FIG. 4 is a flow diagram representing a process of using the AM system of FIG. 3;
FIG. 5 is a schematic block diagram of an AM system using a halogen gas in accordance with another embodiment of the present invention;
FIG. 6 is a flow diagram representing a process of using the AM system of FIG. 5;
FIG. 7 is a schematic block diagram of an AM system using a halogen gas in accordance with another embodiment of the present invention; and
FIG. 8 is a flow diagram representing a process of using the AM system of FIG. 7.

### DETAILED DESCRIPTION OF THE INVENTION

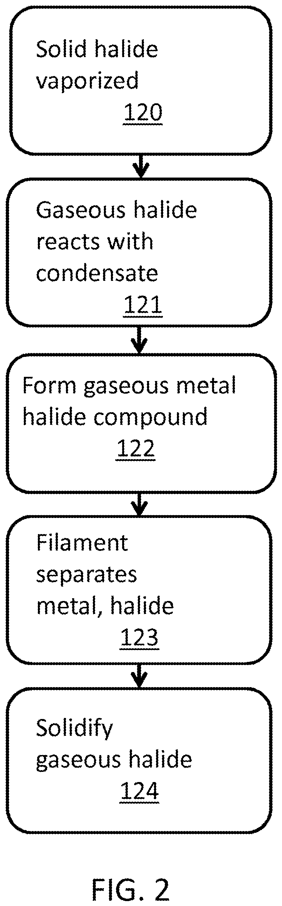

FIG. 2 represents a chemical reaction process that can be used in an AM system embodying the present invention. A solid halogen is vaporized in step 120. The gaseous halogen that is formed is contacted with the metal condensate. While titanium is specifically disclosed as the metal condensate, aluminum, vanadium, or other metals also may be used. This causes a reaction in step 121. A gaseous metal halide compound is formed in step 122. A filament is used to separate the metal from the halide and reverse the reaction in step 123. The gaseous halogen is then cooled and solidifies in step 124.

For example, the solid halogen may be a solid material containing iodine. The I(s) is vaporized by raising its temperature above, for example, approximately 150°C. The pressure in the AM system also may be reduced. Solid titanium condensate reacts with the I₂(g) to form TiI₄(g) using the following reaction:

Ti(s) + 2I₂(g) → TiI₄(g)

The filament is controlled to approximately 1400°C to separate the TiI₄(g) using the following reaction:

TiI₄(g) → Ti(s) + 2I₂(g)

When cooled, the I₂(g) will solidify into the I(s). For example, the I₂(g) may be cooled below 150°C to form I(s). During solidification, the pressure in the AM system may be increased.

The particular halogen or gaseous halogen species can be selected based on, for example, the metal in the condensate, the AM process parameters, the component being manufactured, or the desired condensate removal level. Instead of I₂, other halogens like F₂, Br₂, or Cl₂ are used. A mixture of different halogens or one or more halogens with other gaseous species also may be used. The temperature to melt the solid halogen material, condense the gaseous halogen material, dissociate the gaseous metal halide compound, heat components in the AM system, or cool components in the AM system may vary based on the vaporization temperature and condensation temperature of the halogen, halogens, or gas mixture that is used.

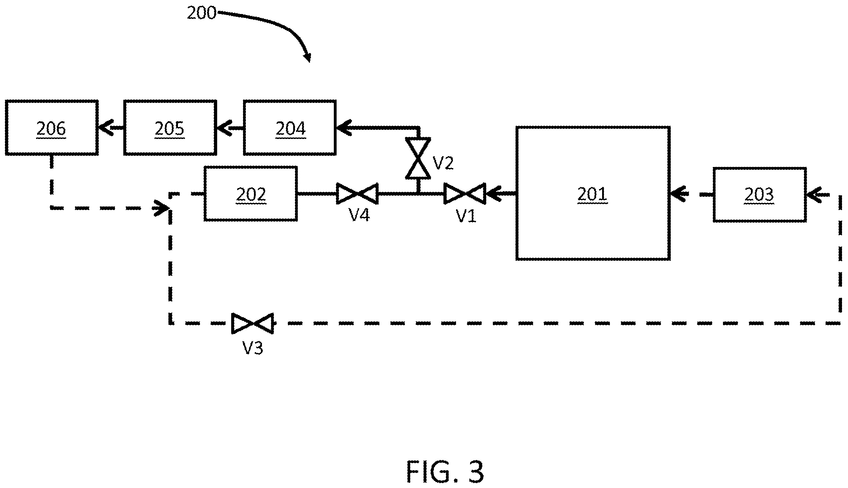

FIG. 3 is a schematic of an embodiment of an AM system 200 using a halogen gas. In FIG. 3, the solid arrows represent inert gas and suspended condensate and the dashed arrows represent inert gas with less condensate or even no condensate. By less condensate, the flows represented by the dashed arrows have less condensate than the flows represented by the solid arrows.

The build chamber 201, where the AM process occurs, is upstream of the filter 202 and circulating fan 204. The build chamber 201 uses a laser beam or electron beam. Between the build chamber 201 and the filter 202 are valves V1 and V4. Between the build chamber 201 and the circulating fan 204 are valves V1 and V2.

Downstream of the circulating fan 204 is the halogen vessel 205 and dissociation chamber 206. The dissociation chamber 206 and filter 202 are connected to the build chamber 201 through valve V3 and fan 203.

The halogen vessel 205 is connected to the build chamber 201 and has a halogen gas source that is configured to generate a gaseous halogen. The halogen vessel 205 includes a heating system to raise the temperature of and vaporize a solid halogen material. This generates a gaseous halogen, such as I₂.

The dissociation chamber 206 has a replaceable filament, which may be fabricated of tungsten or other materials. The filament in the dissociation chamber 206 is heated and placed in a flowpath of the gaseous halogen or gaseous metal halide compound.

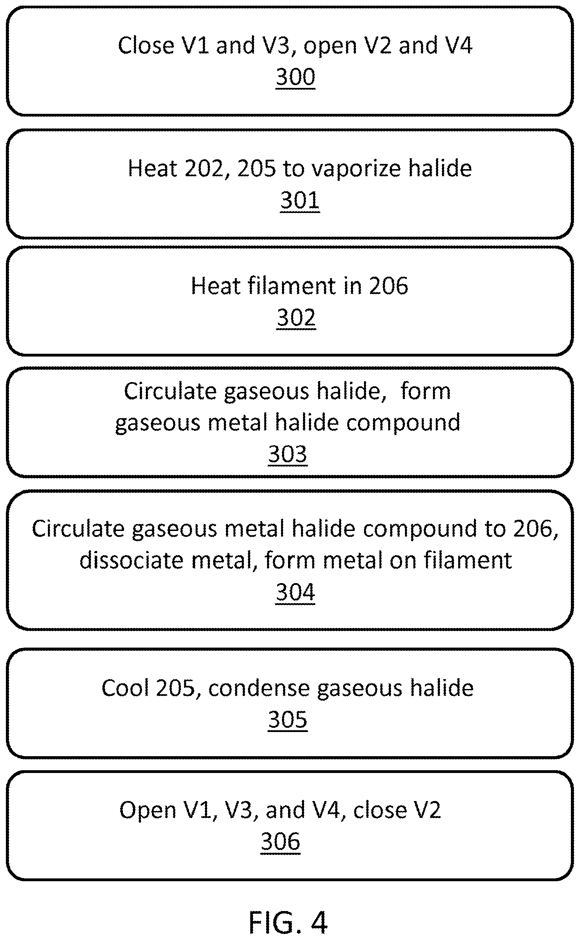

The embodiment of FIG. 3 may be used to clean the filter 202. FIG. 4 is a diagram representing a process of using the embodiment of FIG. 3. In step 300, valves V1 and V3 are closed and valves V2 and V4 are opened. The filter 202 and halogen vessel 205 are heated to vaporize the solid halogen material and form a gaseous halogen in step 301. The filament in the dissociation chamber 206 is heated in step 302. The gaseous halogen is circulated between valve V1 and V3. The gaseous halogen reacts with the metal condensate to form a gaseous metal halide compound in step 303. The gaseous metal halide compound is circulated to the dissociation chamber 206 and the metal dissociates onto the filament in step 304. There, the metal collects, coalesces, or is otherwise deposited on the filament. Once the cleaning is finished, the halogen vessel 205 is cooled in step 305 to cause the gaseous halogen to condense. Valves V1, V3, and V4 are then opened and valve V2 is closed in step 306.

To clean the build chamber 201, either all valves V1, V2, V3, and V4 in FIG. 3 are opened or only valve V4 is closed and valves V1, V2, and V3 are opened. This enables the gaseous halogen to circulate to the build chamber 201.

When the filter 202 is sufficiently cleaned and condensate has been deposited on the filament in the dissociation chamber 206, the halogen gas is transported back to the halogen vessel 205 to be solidified. The solid halogen material can remain in solid form until needed for another cleaning cycle. Other parts of the AM system 200 may be kept at an elevated temperature to prevent or reduce solidification other than in the halogen vessel 205.

The filament in the dissociation chamber 206, which may be a tungsten filament, is periodically replaced. The used filament may be discarded. In the example of titanium condensate, the titanium metal adheres to the filament and is inert in the presence of oxygen. Thus, the filament is safe to handle and dispose of normally.

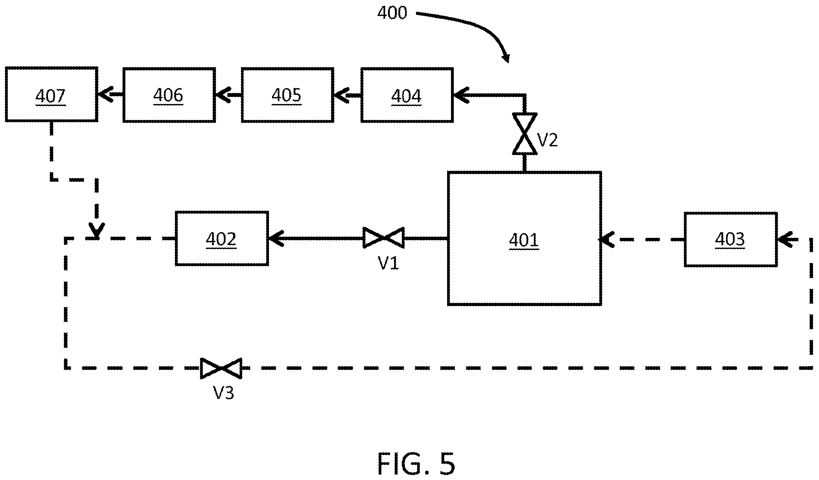

FIG. 5 is a schematic of another embodiment of an AM system 400 using a halogen gas. In FIG. 5, the solid arrows represent inert gas and suspended condensate and the dashed arrows represent inert gas with less condensate or even no condensate. By less condensate, the flows represented by the dashed arrows have less condensate than the flows represented by the solid arrows.

The build chamber 401, where the AM process occurs, may use, for example, a laser beam or electron beam. The build chamber 401 is upstream of the filter 402 and circulating fan 404. Between the build chamber 401 and the filter 402 is valve V1. Between the build chamber 401 and the circulating fan 404 is valve V2.

Downstream of the circulating fan 404 is the halogen vessel 405 and dissociation chamber 406. The dissociation chamber 406 and filter 402 are connected to the build chamber 401 through valve V3 and fan 403. The halogen vessel 405 may be similar to the halogen vessel 205 of FIG. 3. The dissociation chamber 406 may be similar to the dissociation chamber 206 of FIG. 3.

Downstream of the dissociation chamber 406 between this dissociation chamber 406 and the valve V3 is a heater 407. The gaseous halogen may need to remain hot (such as ≥ 350°C) in order for the titanium iodide reaction to occur. The heater 407 helps maintain the gaseous halogen at this temperature.

The heater 407 also may be attached to or disposed in the build chamber 401. Gaseous halogen leaving the halogen vessel 405 is hot. If the pipes in the AM system 400 are lagged the gaseous halogen will remain hot. The build chamber 401 may include the heater 407 to maintain the gaseous halogen at the desired temperature.

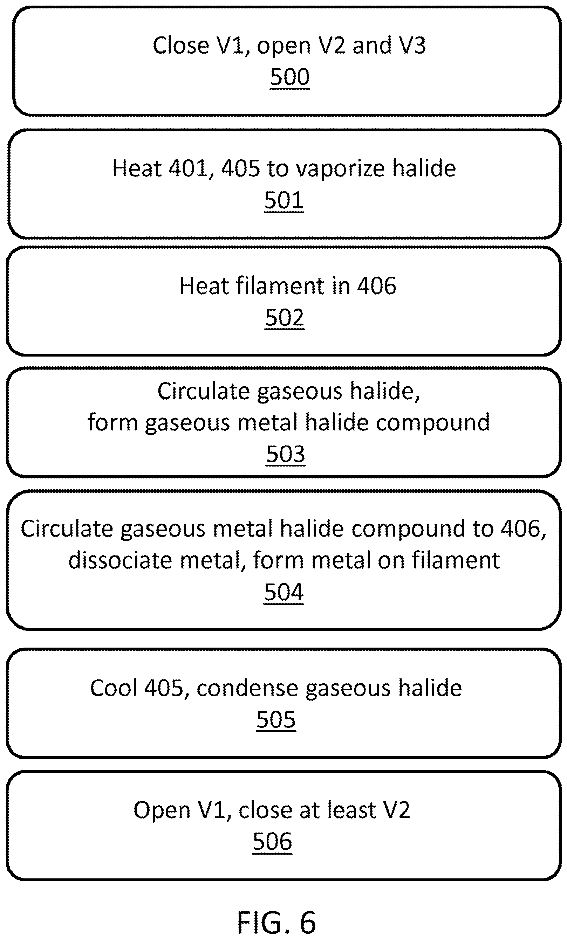

The embodiment of FIG. 5 may be used to clean the build chamber 401. FIG. 6 is a diagram representing a process of using the embodiment of FIG. 5. In step 500, valve V1 is closed and valves V2 and V3 are opened. The build chamber 401 and halogen vessel 405 are heated to vaporize the solid halogen material and form a gaseous halogen in step 501. The filament in the dissociation chamber 406 is heated in step 502. The gaseous halogen is circulated and reacts with the metal condensate to form a gaseous metal halide compound in step 503. The gaseous metal halide compound is circulated to the dissociation chamber 406 and the metal dissociates onto the filament in step 504. There, the metal may collect, coalesce, or otherwise be deposited on the filament. Once the cleaning is finished, the halogen vessel 405 is cooled in step 505 to cause the gaseous halogen to condense. Valve V1 is then opened and valve V2 or valves V2 and V3 are closed in step 506.

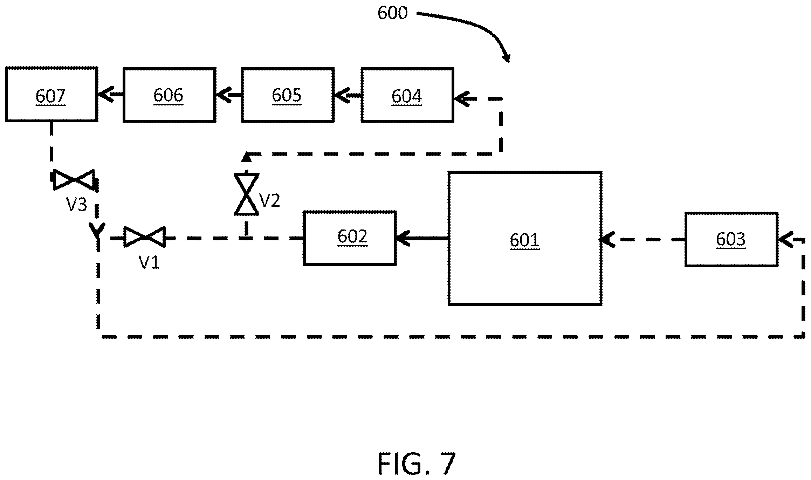

FIG. 7 is a schematic of another embodiment of an AM system 600 using a halogen gas. In FIG. 7, the solid arrows represent inert gas and suspended condensate and the dashed arrows represent inert gas with less condensate or even no condensate. By less condensate, the flows represented by the dashed arrows have less condensate than the flows represented by the solid arrows.

The build chamber 601, where the AM process occurs, may use, for example, a laser beam or electron beam. The build chamber 601 is upstream of the filter 602 and circulating fan 604. Downstream of the filter 602 are valves V1, V2, and V3. V1 is between the filter 602 and the fan 603. V2 is between the filter 602 and circulating fan 604. V3 is between the heater 607 and the fan 603.

Downstream of the circulating fan 604 is the halogen vessel 605 and dissociation chamber 606. The halogen vessel 605 may be similar to the halogen vessel 205 of FIG. 3. The dissociation chamber 606 may be similar to the dissociation chamber 206 of FIG. 3. The heater 607 may be similar to the heater 407 in FIG. 5.

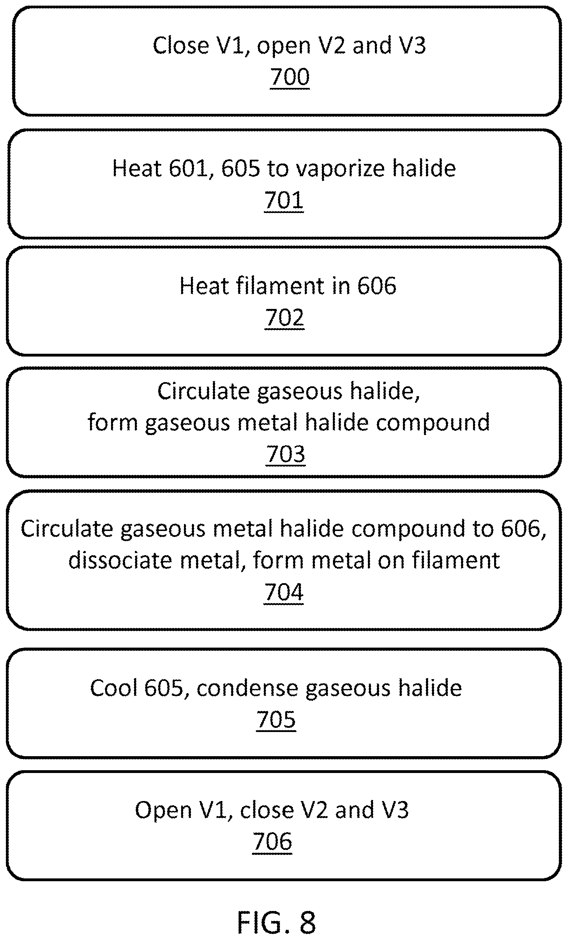

The embodiment of FIG. 7 may be used to clean the build chamber 601 and filter 602. FIG. 8 is a diagram representing a process of using the embodiment of FIG. 7. In step 700, valve V1 is closed and valves V2 and V3 are opened. The build chamber 601 and halogen vessel 605 are heated to vaporize the solid halogen material and form a gaseous halogen in step 701. The filament in the dissociation chamber 606 is heated in step 702. The gaseous halogen is circulated and reacts with the metal condensate to form a gaseous metal halide compound in step 703. The gaseous metal halide compound is circulated to the dissociation chamber 606 and the metal dissociates onto the filament in step 704. There, the metal may collect, coalesce, or otherwise be deposited on the filament. Once the cleaning is finished, the halogen vessel 605 is cooled in step 705 to cause the gaseous halogen to condense. Valve V1 is then opened and valves V2 and V3 are closed in step 706.

The halogen vessel can be located upstream or downstream of the build chamber. In an alternate embodiment, the halogen vessel is located upstream of the build chamber and the dissociation chamber is located downstream of the build chamber. Of course, other designs are possible.

The circuit illustrated in FIG. 3, FIG. 5, or FIG. 7 may be kept at an elevated temperature when the halogen gas solidifies in the dissociation chamber 206, 406, or 606. This prevents the solid halogen from depositing elsewhere in the AM system 200, 400, or 600. Heaters may be located in the various chambers or gas lines to prevent such solidification. However, the temperature of the gaseous halogen may be controlled within a particular range to prevent the gaseous halogen from excessively corroding the wall materials.

The gaseous halogen may circulate in the build chamber 201, 401, or 601 during the build process or in between steps of the build process. The effect on the component being manufactured or the powder in the build chamber 201, 401, or 601 may be negligible, may be controlled, or may be compensated for.

In yet another embodiment, electrostatic or other methods known to those skilled in the art may be used to cause the metal halide compound or condensate to converge on a heated wire, such as the filament in the dissociation chamber 206, 406, or 606.

Condensate that did not react with the gaseous halogen may still melt in the dissociation chamber 206, 406, or 606 and form a deposit after the molten metal cools.

The cleaning process disclosed herein may be separate from the build process in the build chamber 201, 401, or 601. The cleaning process also may be used during the build process in the build chamber 201, 401, or 601 if the impact to the component being manufactured is negligible, controlled, or compensated for.

The cleaning process disclosed herein may be a closed cycle or an open cycle. An open cycle may be possible depending on the nature of the halogen and reaction products.

Components manufactured using an AM process may have a surface with partially-fused or loose powder particles on it. These particles become detached during assembly and use, and may cause subsequent problems during component operation. Such particles may be small and may be of large relative surface area. For example, these particles may be approximately 15 µm to 45 µm in dimension. When exposed to the gaseous halogen, the particles are consumed in a reaction and removed from the component. The surface of the component may be rendered free of the loose or partially-attached particles without subsequent bead blasting, HF treatments, or other particle removal steps. Thus, this cleaning process also can be used during or as an additional step to the AM process to clean the component being manufactured.

In an alternate embodiment, a separate cleaning chamber is located in the AM system. This cleaning chamber may be connected to the dissociation chamber and halogen vessel. Additional valves and gas lines are used to flow the halogen gas to this cleaning chamber. A finished or incomplete part may be moved from the build chamber to the cleaning chamber to remove particles. Instead of a cleaning chamber connected to the AM system, a separate standalone cleaning booth with a dissociation chamber and halogen vessel also may be used.

The safety of an AM process is improved using embodiments disclosed herein due to elimination or reduction of dangerous condensate. Personnel may not need to handle filters contaminated with condensate or clean contaminated build chambers. Manufacturing costs are lowered due to the elimination of hazardous waste materials. The build chamber and transparent window will remain cleaner for a longer period, which will enable longer build times, improve system uptime, and reduce the necessary preventative maintenance. The laser optics will remain cleaner for a longer period, which will provide improved laser beam quality and improved product quality, fidelity, and consistency. Parts produced using the AM process may be cleaner or have fewer undesired particles attached to surfaces. These benefits can be provided without impacting the quality of the components being manufactured using the AM process.

## Claims

1. An additive manufacturing system (200) comprising:
a build chamber (201);
a laser source configured to direct a laser beam into the build chamber (201) thereby forming metal condensate in the build chamber (201);
a halogen vessel (205) connected to the build chamber (201), wherein the halogen vessel (205) includes a halogen gas source and a heating system; and
a dissociation chamber (206) connected to the halogen vessel (205), wherein the dissociation chamber (206) includes a filament, said filament being heated at a temperature of approximately 1400°C.

2. The additive manufacturing system of claim 1, wherein the halogen gas source is configured to generate a gaseous halogen from a solid halide material, preferably wherein the gaseous halogen is one of h, F₂, Br₂ or Cl₂.

3. The additive manufacturing system of claim 1, wherein the filament is fabricated of tungsten.

4. The additive manufacturing system of claim 1, wherein the halogen vessel (205) is downstream of the build chamber (201) and the dissociation chamber (206) is downstream of the halogen vessel (205), preferably further comprising a filter (202) downstream of the build chamber (201) in parallel with the halogen vessel (205) and the dissociation chamber (206).

5. The additive manufacturing system of claim 1, wherein a cleaning chamber is connected to the dissociation chamber (206) and halogen vessel (205).

6. The additive manufacturing system of claim 1, further comprising a cleaning booth comprising a cleaning chamber, the halogen vessel (205) and the disassociation chamber (206) wherein the halogen vessel (205) is connected to the cleaning chamber.

7. A method comprising:
directing a laser beam into a build chamber (201) of an additive manufacturing system (200) thereby forming metal condensate;
transporting with inert gas the metal condensate from the build chamber (201) to a heated halogen vessel (205);
contacting the metal condensate with a gaseous halogen to form a gaseous metal halide compound;
transporting the gaseous metal halide compound from the heated halogen vessel (205) to a dissociation chamber (206) comprising a filament, said filament being heated at a temperature of approximately 1400 °C;
decomposing the gaseous metal halide compound in the presence of the filament; and
depositing a metal of the gaseous metal halide on the filament.

8. The method of claim 7, wherein the metal condensate comprises titanium, and/or wherein the gaseous halogen comprises one of I₂, F₂, Br₂ or Cl₂, and/or the gaseous metal compound comprises TiI₄.

9. The method of claim 7, further comprising heating a solid halide material to generate the gaseous halogen.

10. The method of claim 7, further comprising transporting the gaseous halogen from the filament to a filter (202) or the build chamber (201), or transporting the gaseous halogen to a halogen vessel (205) and solidifying the gaseous halide into a solid halide material, and/or further comprising replacing the filament.

11. A method of removing particles from the surface of a component comprising:
directing a laser beam into a build chamber of an additive manufacturing system (200) to form a component; and
contacting the component with a gaseous halogen thereby removing particles from a surface of the component.

12. The method of claim 11, wherein the particles comprise powder particles, preferably wherein the powder particles are partially-fused to the surface.

13. The method of claim 11, wherein the contacting occurs at least one of during the directing or after the directing.

14. The method of claim 11, wherein the contacting occurs in at least one of the build chamber (201) or a cleaning chamber separate from the build chamber (201).

## Patentansprüche

1. Generatives Fertigungssystem (200), umfassend:
eine Baukammer (201);
eine Laserquelle, die konfiguriert ist, um einen Laserstrahl in die Baukammer (201) zu leiten und dadurch Metallkondensat in der Baukammer (201) zu bilden;
ein Halogengefäß (205), das mit der Baukammer (201) verbunden ist, wobei das Halogengefäß (205) eine Halogengasquelle und ein Heizsystem einschließt; und
eine mit dem Halogengefäß (206) verbundene Dissoziationskammer (205), wobei die Dissoziationskammer (206) ein Filament einschließt, wobei das Filament auf eine Temperatur von etwa 1400 °C erhitzt wird.

2. Generatives Fertigungssystem nach Anspruch 1, wobei die Halogengasquelle konfiguriert ist, um ein gasförmiges Halogen aus einem festen Halogenidmaterial zu erzeugen, wobei das gasförmige Halogen vorzugsweise eines von I₂, F₂, Br₂ oder Cl₂ ist.

3. Generatives Fertigungssystem nach Anspruch 1, wobei das Filament aus Wolfram hergestellt ist.

4. Generatives Fertigungssystem nach Anspruch 1, wobei das Halogengefäß (205) der Baukammer (201) nachgelagert ist und die Dissoziationskammer (206) dem Halogengefäßes (205) nachgelagert ist, ferner vorzugsweise ein der Baukammer (201) nachgelagertes Filter (202) parallel zum Halogengefäß (205) und zur Dissoziationskammer (206) umfassend.

5. Generatives Fertigungssystem nach Anspruch 1, wobei eine Reinigungskammer mit der Dissoziationskammer (206) und dem Halogengefäß (205) verbunden ist.

6. Generatives Fertigungssystem nach Anspruch 1, ferner eine Reinigungskabine umfassend, die eine Reinigungskammer, das Halogengefäß (205) und die Disassoziationskammer (206) umfasst, wobei das Halogengefäß (205) mit der Reinigungskammer verbunden ist.

7. Verfahren, umfassend:
Lenken eines Laserstrahls in eine Baukammer (201) eines generativen Fertigungssystems (200), wodurch Metallkondensat gebildet wird;
Transportieren des Metallkondensats mit Inertgas aus der Baukammer (201) zu einem erhitzten Halogengefäß (205);
Inkontaktbringen des Metallkondensats mit einem gasförmigen Halogen zur Bildung einer gasförmigen Metallhalogenidverbindung;
Transportieren der gasförmigen Metallhalogenidverbindung aus dem erhitzten Halogengefäß (205) zu einer Dissoziationskammer (206), die ein Filament umfasst, wobei das Filament auf eine Temperatur von etwa 1400 °C erhitzt wird;
Zersetzen der gasförmigen Metallhalogenidverbindung in Gegenwart des Filaments; und
Abscheiden eines Metalls des gasförmigen Metallhalogenids auf dem Filament.

8. Verfahren nach Anspruch 7, wobei das Metallkondensat Titan umfasst und/oder wobei das gasförmige Halogen eines von I₂, F₂, Br₂ oder Cl₂ umfasst und/oder die gasförmige Metallverbindung TiI₄ umfasst.

9. Verfahren nach Anspruch 7, ferner das Erhitzen eines festen Halogenidmaterials umfassend, um das gasförmige Halogen zu erzeugen.

10. Verfahren nach Anspruch 7, ferner das Transportieren des gasförmigen Halogens vom Filament zu einem Filter (202) oder der Baukammer (201), oder das Transportieren des gasförmigen Halogens zu einem Halogengefäß (205) und das Erstarrenlassen des gasförmigen Halogenids zu einem festen Halogenidmaterial umfassend und/oder ferner das Ersetzen des Filaments umfassend.

11. Verfahren zum Entfernen von Partikeln von der Oberfläche einer Komponente, umfassend:
Lenken eines Laserstrahls in eine Baukammer eines generativen Fertigungssystems (200), um eine Komponente zu bilden; und
Inkontaktbringen der Komponente mit einem gasförmigen Halogen, wodurch Partikel von einer Oberfläche des Bauteils entfernt werden.

12. Verfahren nach Anspruch 11, wobei die Partikel Pulverpartikel umfassen, wobei die Pulverpartikel vorzugsweise teilweise mit der Oberfläche verschmolzen werden.

13. Verfahren nach Anspruch 11, wobei das Inkontaktbringen während des Lenkens und/oder nach dem Lenken erfolgt.

14. Verfahren nach Anspruch 11, wobei das Inkontaktbringen in der Baukammer (201) und/oder einer von der Baukammer (201) getrennten Reinigungskammer erfolgt.

## Revendications

1. Système de fabrication d'additif (200) comprenant :
une chambre de construction (201) ;
une source laser configurée pour diriger un faisceau laser dans la chambre de construction (201), formant ainsi un condensat de métal dans la chambre de construction (201) ;
un récipient d'halogène (205) connecté à la chambre de construction (201), dans lequel le récipient d'halogène (205) inclut une source de gaz halogène et un système de chauffage ; et
une chambre de dissociation (206) reliée au récipient d'halogène (205), dans lequel la chambre de dissociation (206) inclut un filament, ledit filament étant chauffé à une température d'approximativement 1400 °C.

2. Système de fabrication d'additif selon la revendication 1, dans lequel le gaz de la source d'halogène est configuré pour générer un halogène gazeux en matériau solide d'halogénure, de préférence dans lequel l'halogène gazeux est un parmi un I₂, F₂, Br₂ ou Cl₂.

3. Système de fabrication d'additif selon la revendication 1, dans lequel le filament est fabriqué en tungstène.

4. Système de fabrication d'additif selon la revendication 1, dans lequel le récipient d'halogène (205) est en aval de la chambre de construction (201) et la chambre de dissociation (206) est en aval du récipient d'halogène (205), de préférence comprenant en outre un filtre (202) en aval de la chambre de construction (201) en parallèle avec le récipient d'halogène (205) et la chambre de dissociation (206).

5. Système de fabrication d'additif selon la revendication 1, dans lequel une chambre de nettoyage est raccordée à la chambre de dissociation (206) et au récipient d'halogène (205).

6. Système de fabrication d'additif selon la revendication 1, comprenant en outre une cabine de nettoyage comprenant une chambre de nettoyage, le récipient d'halogène (205) et la chambre de dissociation (206), dans lequel le récipient d'halogène (205) est raccordé à la chambre de nettoyage.

7. Procédé comprenant :
la direction d'un faisceau laser dans une chambre de construction (201) d'un système de fabrication d'additif (200), formant ainsi un condensat métallique ;
le transport avec un gaz inerte du condensat métallique de la chambre de construction (201) vers un récipient d'halogène chauffé (205) ;
la mise en contact du condensat métallique avec un halogène gazeux pour former un composé halogénure de métallique gazeux ;
le transport du composé halogénure métallique gazeux du récipient d'halogène chauffé (205) vers une chambre de dissociation (206) comprenant un filament, ledit filament étant chauffé à une température d'approximativement 1400°C ;
la décomposition du composé halogénure métallique gazeux en présence du filament ; et
la déposition d'un métal de l'halogénure métallique gazeux sur le filament.

8. Procédé selon la revendication 7, dans lequel le condensat métallique comprend du titane, et/ou dans lequel l'halogène gazeux comprend un de I₂, F₂, Br₂ ou Cl₂, et/ou le composé métallique gazeux comprend du TiI₄.

9. Procédé selon la revendication 7, comprenant en outre le chauffage d'un matériau halogénure solide pour générer l'halogène gazeux.

10. Procédé selon la revendication 7, comprenant en outre le transport de l'halogène gazeux du filament vers un filtre (202) ou la chambre de construction (201), ou le transport de l'halogène gazeux dans un récipient d'halogène (205) et la solidification de l'halogénure gazeux en un matériau halogénure solide, et/ou comprenant en outre le remplacement du filament.

11. Procédé de retrait de particules de la surface d'un composant comprenant :
la direction d'un faisceau laser dans une chambre de construction d'un système de fabrication d'additif (200) pour former un composant ; et
la mise en contact du composant avec un halogène gazeux en éliminant de ce fait des particules d'une surface du composant.

12. Procédé selon la revendication 11, dans lequel les particules comprennent des particules de poudre, de préférence dans lequel les particules de poudre sont partiellement fusionnées avec la surface.

13. Procédé selon la revendication 11, dans lequel la mise en contact a lieu au moins pendant la direction, ou après la direction.

14. Procédé selon la revendication 11, dans lequel la mise en contact se produit dans au moins l'une de la chambre de construction (201) ou d'une chambre de nettoyage séparée de la chambre de construction (201).
